# EUROPEAN PATENT SPECIFICATION

(11) **EP 3 495 275 B1**
(45) Date of publication and mention of the grant of the patent: **21.09.2022**
(21) Application number: 18209599.2
(22) Date of filing: 30.11.2018
(51) Int. Cl.: B64D 47/08, H04N 7/18, B64D 45/00, B64D 11/00

(54) **INTEGRATED IMAGING SYSTEM FOR A CONNECTED AIRCRAFT**
INTEGRIERTES BILDGEBUNGSSYSTEM FÜR EIN VERBUNDENES FLUGZEUG
SYSTÈME D'IMAGERIE INTÉGRÉ POUR UN AÉRONEF CONNECTÉ

(30) Priority: 08.12.2017 US 201715836773
(43) Date of publication of application: 12.06.2019
(73) Proprietor: Rockwell Collins, Inc., Cedar Rapids, IA 52498 (US)
(72) Inventor: SKELLY, Trevor, Duvall, WA 98019 (US); MCKEE, Jefferey M., Duvall, WA 98019 (US)
(74) Representative: Algemeen Octrooi- en Merkenbureau B.V.

(56) References cited:
- WO-A1-2015/155379
- FR-A1- 2 904 506
- US-A1- 2002 093 564
- US-A1- 2003 117 494
- US-A1- 2010 253 781
- US-A1- 2012 307 057
- US-A1- 2017 316 664
- US-B1- 6 366 311

## Description

The present invention relates to an aircraft. Certain seats within the passenger compartments of commercial aircraft may be designated for the use of flight attendants and crewmembers. Once the aircraft reaches a safe cruising altitude or flight segment, crewmembers may monitor any passenger security and safety issues firsthand as they move throughout the cabin. For example, Richard Reid was thwarted in his effort to detonate explosives concealed in his shoes aboard American Flight 63 when he was detected by cabin crew. However, during taxi, takeoff and landing (TTL) procedures cabin crew must monitor the safety of the cabin and passengers from assigned seats, in a safely seated and restrained (e.g., belted) position. US aviation guidelines provide that each such assigned seat provide a direct view of the cabin area for which the occupying crewmember is responsible. In practice, this means that each crewmember must have (from the seated and belted position) direct visual contact with the cabin area (and a minimum percentage of the passengers) and main aisles, such that the crew are aware of any emerging needs or issues relative to passenger safety.

While cabin crew should be proximate to an emergency exit should evacuation or other emergency procedures supervised by crewmembers be necessary, direct view can be a critical factor in the success or failure of such procedures. For example, in the 1985 British Airtours accident at Manchester Airport (caused by engine failure during an aborted takeoff, which resulted in catastrophic fire both outside and inside the aircraft) the TTL direct-view positions of forward crew members were obstructed by galley bulkheads. This frustrated the crew's ability to monitor cabin conditions and evacuate the aircraft, contributing to extensive casualties due to smoke inhalation by passengers unable to rapidly evacuate through limited exits (some of which were blocked by smoke and/or fire). In addition, contemporary and nextgeneration commercial cabin interiors may provide for additional seating classes or amenities and consequently additional partitions or bulkheads, either of which may frustrate direct view requirements by obstructing crew sightlines. For example, economy-class cabins may be further partitioned into standard-economy and premium-economy zones. In some cases, business-class or first-class seats may be further partitioned or enclosed for enhanced privacy. The height of said partitions, bulkheads, and walls may directly frustrate the sightlines of cabin crew in a seated and belted position, even if the partitions are only temporary in nature, e.g., curtains deployed to separate premium and economy seats. While these curtains may be opened during TTL phases, enhanced-privacy zones and compartments, however, may incorporate opaque floor-to-ceiling partitions rather than curtains, and thus it may not be possible to improve visibility. This is especially true if cabin crew seats are positioned at the front of the cabin (e.g., to maximize direct view of the cabin and aisles in a generally aft direction) and such premium or enhanced-privacy seating is positioned directly aft of the cabin crew seats (e.g., between the crew seats and the economy cabin proper). WO 2015/155379 A1 relates to a monitoring system to be installed in a cabin of an aircraft for passenger transportation, comprising at least one imaging device and at least one output device. Information displayed by the output device comprises indication of whether a passenger seat in the cabin is occupied or empty, whether humans or objects such as service trolleys are situated in the aisles, whether a seat belt is fastened or not, or whether a backrest of a passenger seat is in vertical position when requested.

The present invention relates to an aircraft as defined in claim 1. Embodiments of the inventive concepts disclosed herein are directed to an aircraft comprising an integrated imaging system for a connected aircraft. The system includes cameras mounted within the cabin interior of the aircraft. Each camera has a particular field of view (FOV) which includes one or more defined zones within the aircraft. Each camera captures an image stream including seating, aisles, and passengers within the camera's FOV. The system includes processors for receiving the image streams and assembling enhanced image streams, e.g., by stitching together or composing image streams from within the same zone or from different zones throughout the aircraft, or by overlaying the image streams with relevant environmental data. The enhanced or composite image streams may be transmitted wirelessly or sent via cable or other physical link to fixed-mount or mobile display devices (e.g., tablets, smartphones) for viewing by cabin crew.

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 illustrates an exemplary embodiment of a system according to the inventive concepts disclosed herein; and
FIG. 2A illustrates the system of FIG. 1;
FIG. 2B illustrates the system of FIG. 2A;
FIG. 3A is a diagrammatic illustration of the system of FIG. 2B;
FIG. 3B is a diagrammatic illustration of the system of FIG. 3A;
FIG. 4 illustrates a mobile device of the system of FIG. 3B; and
FIG. 5 illustrates the system of FIG. 3B.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a' and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to an aircraft comprising an integrated imaging system for enhancing direct view capability aboard the connected aircraft. It is an objective of the disclosed system to maximize the proportions of passengers, seats, aisles, and other relevant factors visible by cabin crew from a seated and belted position (rather than merely meeting minimum direct-view requirements) without adding crewmembers or removing revenue-generating seating. In addition, the system may enhance the direct view capability of each individual crewmember by providing access to views and perspectives not within their particular sightlines. Further, the system may account for additional partitions and bulkheads which may obstruct physical sightlines, and provide equal direct view capability to both sides of the aircraft. Finally, the system may provide for centralized, remote direct view assistance via ground-based control facilities.

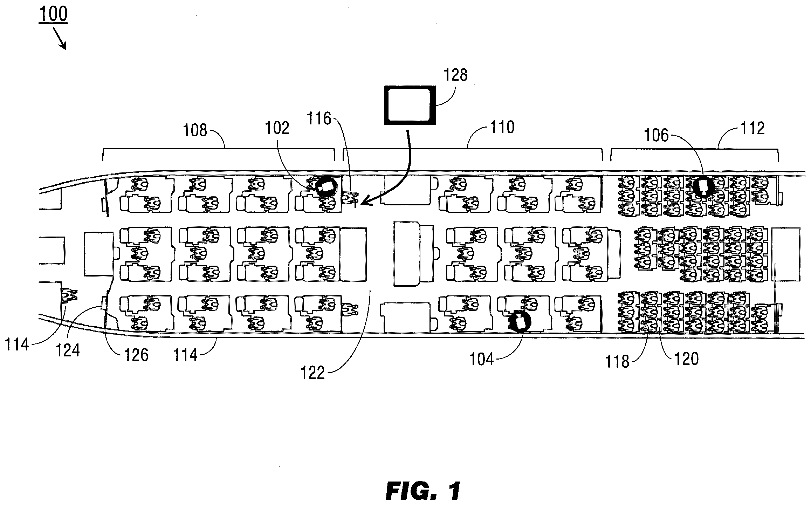

Referring to FIG. 1, an exemplary embodiment of an integrated imaging system 100 (IIS) according to the inventive concepts disclosed herein may include cameras 102, 104, 106 mounted within various zones (e.g., first class zone 108, business class zone 110, economy class zone 112) of the interior cabin of an aircraft 114. The aircraft 114 may include, for example, commercial aircraft of any size subject to regulations requiring cabin crew (116) to maintain a minimum proportion of passengers (118), aircraft seats (120) and/or aisles (122) in direct view from seated, belted positions (e.g., in designated cabin crew seats) during taxi, takeoff and landing (TTL) procedures.

During TTL procedures, when the cabin crew 116 are seated and belted in their designated cabin crew seats, the cameras 102, 104, 106 may provide views of the interior cabin (e.g., passengers 118, aircraft seats 120, and aisles 122) visible to the cabin crew 116 via monitors (124) mounted in fixed location proximate to the cabin crew seats (e.g., a forward bulkhead 126). Fixed-mount monitors 124 may be mounted proximate to any cabin crew seat wherein a crewmember may be stationed during TTL procedures, or within the cockpit (not shown) for display to the command crew. For example, the cameras 102, 104, and 106 may capture image streams respectively corresponding to a first class zone 108, a business class zone 110, and an economy class zone 112. Each member of the cabin crew (116) may observe the image stream corresponding to a particular zone, or the image streams may be centrally processed into enhanced video streams accessible to all cabin crew, regardless of their positions within the aircraft 114. The IIS 100 may provide for the display of captured image streams via mobile devices 128 (e.g., tablets, smartphones, or other portable computing or communications devices) held by members of the cabin crew 116. For example, a crewmember may access the captured or enhanced image streams through his/her mobile device 128 via a wireless connection, and may be able to manipulate the displayed image via the mobile device 128 (e.g., scrolling through streams from multiple cameras 102, 104, 106; selecting a particular image stream or corresponding zone to watch; panning or zooming a particular camera; enlarging a displayed image; accessing passenger details or additional environmental data through a displayed image). The cabin crew (116) or command crew may activate the IIS 100 for direct view, or engage a direct-view mode of the IIS, via the fixed-mount monitors 124 or mobile devices 128, or via any other appropriate command and control interface of the aircraft 114.

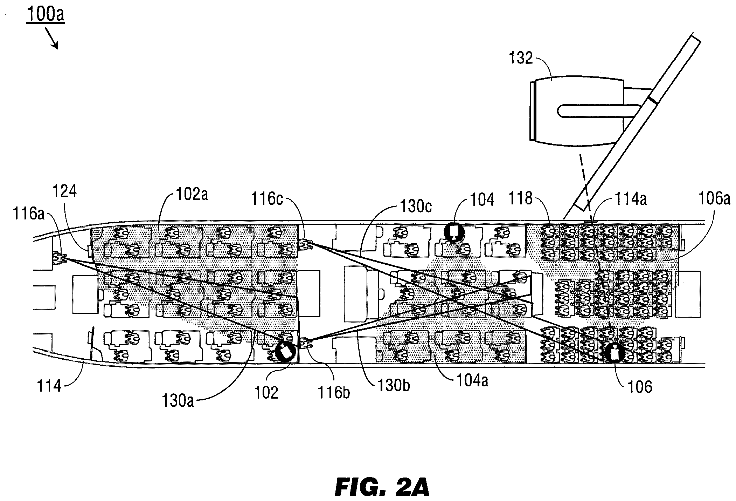

Referring now to FIG. 2A, the system 100a may be implemented and may function similarly to the IIS 100 of FIG. 1, except that the IIS 100a may orient the cameras 102, 104, 106 so as to maximize the coverage of the respective field of view 102a, 104a, 106a (FOV) of each camera. For example, one or more of the cameras 102, 104, 106 may be oriented in a generally lateral direction (e.g., transverse, orthogonal, or otherwise at an angle to the longitudinal (roll) axis of the aircraft 114), greatly increasing the portions of each zone (108, 110, 112; FIG. 1) in direct view by the cabin crew 116a-c compared to the respective fields of view 130a-c directly visible by each crewmember from a seated and belted position (e.g., looking in a generally longitudinal direction with minimal head movement) and visible only by that particular crewmember. Furthermore, via fixed-mount monitors 124 and/or connected mobile devices (128, FIG. 1), the crewmember 116a (seated and belted in first-class zone 108) may have direct-view access to the image streams of zones 110, 112 captured by the cameras 104, 106 in addition to the image stream of the first-class-zone captured by the camera 102. The cameras 102, 104, 106 may be partially or fully controllable by command crew or cabin crewmembers 116a-c (e.g., by panning a camera to shift its field of view or zooming the camera to more closely examine a passenger 118 captured in an image stream). Each camera 102, 104, 106 may be associated with a default configuration and orientation certified for direct view operations during TTL flight segments. For example, when direct view operations are initiated (e.g., when the IIS 100a is activated or direct-view mode engaged), the cameras 102, 104, 106 may revert to their certified configurations and orientations (e.g., direction, focus, settings) throughout the TTL phase (or until the direct-view mode is deactivated). Similarly, the IIS 100a may be connected to an interior lighting system of the aircraft 114, such as the main cabin lighting system or a supplemental LED lighting system. For example, when direct view operations are initiated or the IIS 100a activated, cabin interior lighting may be optimized (e.g., by adjusting the brightness and/or orientation of one or more cabin lighting elements) to emphasize image clarity. For example, cabin lighting may be optimized (either manually or automatically) for maximum clarity when viewed by the human eye, in order to facilitate direct view by cabin crewmembers 116a-c or prevent interference with the cameras 102, 104, 106 (e.g., by preventing frequencies associated with LED cabin lighting from interfering with, or "whiting out", video capture or display equipment). Alternatively, the cabin lighting, or cabin lighting elements associated with a particular zone (108, 110, 112) or FOV (102a, 104a, 106a) may optimize brightness or orientation for maximum clarity when viewed by an associated camera 102, 104, 106.

The IIS 100a may include cameras mounted within, and capturing direct views of, other interior areas or exterior surfaces of the aircraft. For example, the IIS 100a may capture (and display to the cabin crew 116a-c via fixed-mount monitors 124 and/or mobile devices 128) image streams of cargo compartments, galley areas, crew rest areas, and other remote areas of the aircraft (e.g., remote areas of the main cabin, cargo compartments, rest areas, and other parts of the aircraft interior not directly visible to the cabin crew). Similarly, the IIS 100a may include cameras mounted to exterior surfaces of the aircraft to monitor, e.g., cargo doors or control surfaces. Interior cameras, such as the camera 106, may be positioned and oriented so as to capture, through one or more windows (114a) of the aircraft 114, an image stream including an engine 132 of the aircraft. In this way the camera 106 may assist in rapid detection of a failure of the engine 132 during takeoff (e.g., the engine failure associated with the aforementioned Manchester Airport accident). In addition, if the image stream generated by the camera 106 indicates that a large number of passengers within the FOV 106a are looking outside their windows in the direction of the engine 132, this may indicate a potential problem with the engine 132, even if the potential problem is not directly visible by the camera 106. One or more of the cameras 102, 104, 106 may include an infrared (IR)-spectrum (NIR, SWIR, LWIR) thermographic imager for capturing thermal signatures (in addition to visible-light images) of exterior surfaces, cargo compartments, and other areas of the aircraft 114 (e.g., an anomalous thermal signature including the engine 132 may indicate a potential problem).

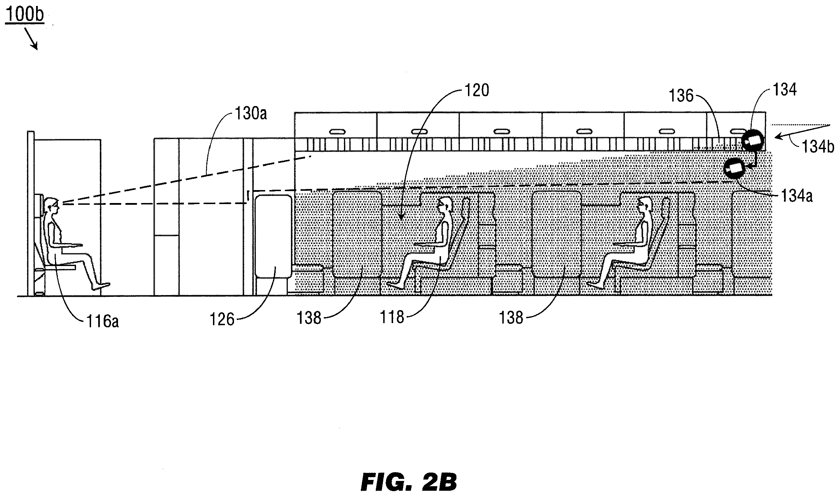

Referring now to FIG. 2B, the IIS 100b may be implemented and may function similarly to the IIS 100a of FIG. 2A, except that the IIS 100b may be a high privacy system including one or more deployable cameras 134. For example, the deployable camera 134 may, during TTL procedures when direct view of passengers 118 and seating areas 120 is required (e.g., when the IIS 100b is activated or direct-view mode engaged), deploy into an active position or configuration (134a; e.g., from a Passenger Service Unit 136 (PSU) or similar overhead/interior fixture or structure) in an obvious and conspicuous fashion for direct viewing of passengers and seating areas in enhanced privacy sections of the aircraft 114 (FIG. 2A; e.g., the first-class zone 108 (FIG. 1)). When TTL procedures are complete (e.g., the IIS 100b is deactivated or direct-view mode disengaged), the deployable camera 134 may conspicuously retract into an inactive position or configuration (e.g., into the PSU 136) so as to reinforce to occupying passengers (118) the enhanced privacy associated with the first-class zone 108. The deployable camera 134, similarly to the cameras 102, 104,106 (FIG. 1) may be oriented with a generally downward FOV (134b) relative to the horizontal. This may increase the proportion of passengers 118 and seating areas 120 within direct view of the camera 134. By contrast, the crewmember 116a, at the front of the first-class zone 108, may have at best an obstructed direct view (130a) from a seated position over bulkheads and partitions (126, 138) associated with enhanced-privacy seating (120).

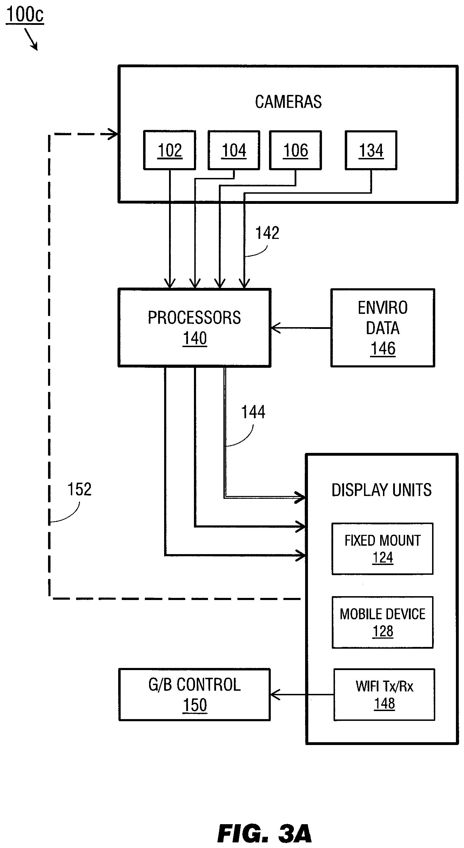

Referring to FIG. 3A, the IIS 100c may be implemented and may function similarly to the IIS 100b of FIG. 2B, except that the IIS 100c may include processors (140) connected to each camera (102, 104, 106. 134) physically or wirelessly. The processors 140 may receive raw image streams (142) from each camera 102, 104, 106, 134 for further processing; for example, the processors 140 may generate enhanced image streams (144) by combining one or more raw image streams 142 captured by one or more cameras 102, 104, 106, 134 or corresponding to one or more zones (FIG. 1; 108, 110, 112) of the aircraft 114 (FIG. 1). Enhanced image streams 144 generated by the processors 140 may generate augmented-reality environments, in which one or more raw image streams 142 may be combined into a composite presentation corresponding to the aircraft 114 as a whole (or to one or more zones 108, 110, 112 thereof) and navigable by cabin crew (116, FIG. 1) via a fixed-mount monitor 124 or mobile device 128, e.g., crewmembers may scroll through multiple image streams or choose from a selection of image streams. Enhanced image streams 144 including augmented-reality environments may be integrated with environmental data 146) stored by the IIS 100c (e.g., passenger data, seating data, baggage data, three-dimensional imagery corresponding to the aircraft 114). The IIS 100c may include, in addition to fixed-mount display units 124 and mobile devices 128, transceivers 148 wirelessly connecting the IIS 100c to a ground-based control facility (150) for remote direct viewing of the passenger cabin in real time or near real time, to reduce the workload on the cabin crew 116. The IIS 100c may include recording devices for recording and storing raw image streams captured by each camera 102, 104, 106 as well as any enhanced image streams or augmented/virtual reality environments generated from the raw image streams by the IIS. Recording devices may be incorporated into the IIS 100c aboard the aircraft, or the image streams may be forwarded to the ground-based control facility 150 for remote recording and storage. One or more of the cameras 102, 104, 106, 134 of the IIS 100c may be partially or fully controllable by the cabin crew 116 based on control input (152) entered through the fixed-mount display units 124 or mobile devices 128.

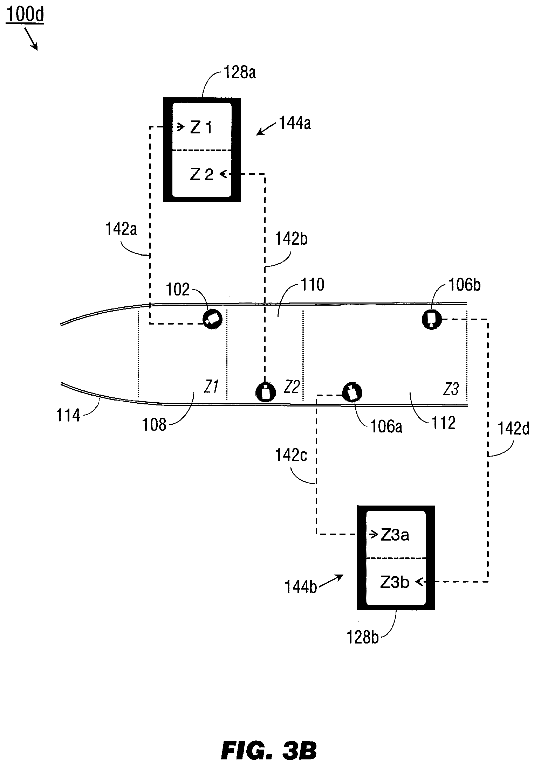

Referring now to FIG. 3B, the IIS 100d may be implemented and may function similarly to the IIS 100c of FIG. 3A, except that the IIS 100d may combine multiple image streams (142a-d) from cameras 102, 104, 106a-b mounted within zones Z1, Z2, Z3 (108, 110, 112) of the aircraft 114. The cabin crew (116, FIG. 1) may access, via mobile devices 128a-b, composite enhanced image streams 144a-b incorporating multiple direct views of the passenger cabin, either composite image streams 144b incorporating multiple views (captured by cameras 106a-b) from within a single zone Z3 (112) or composite image streams 144a incorporating multiple views (captured by cameras 102, 104) from different zones Z1 (108) and Z2 (110).

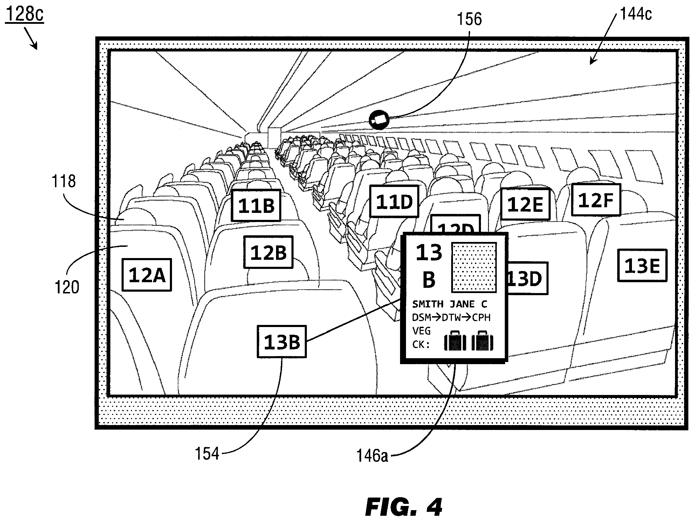

Referring to FIG. 4, the mobile device 128c may be implemented and may function similarly to the mobile devices 128 (FIG. 1) and 128a-b (FIG. 3B) except that the mobile device 128c (or a fixed-mount display unit 124, FIG. 1) may display an enhanced image stream 144c incorporating an augmented reality environment corresponding to the aircraft 114 (FIG. 3B). For example, the enhanced image stream 144c may provide direct view of passengers (118) and passenger seats (120) overlaid with tabs (154) corresponding to each occupied (or unoccupied) seat. A member of the cabin crew (116, FIG. 1) may access additional environmental data (146a) about the seat 120 and/or its occupying passenger 118 (e.g., the passenger's name, corresponding ID photo, connection information, checked bags, dietary or other special needs, health considerations) by clicking, tapping, or otherwise interacting with the tab 154. The enhanced image stream 144c may indicate (156) the locations of additional cameras within the aircraft 114, so that the crewmember may toggle between enhanced image streams, e.g., by tapping or clicking a camera indicator 156. Further, the enhanced image stream 144c may be linked to onboard sensors configured to provide additional occupant data, e.g., weight sensors in a seat to indicate whether or not the seat or module is occupied, harness sensors to indicate whether or not a seatbelt or security harness is fastened, or thermal imagers configured to determine whether an enhanced privacy suite, remote area or compartment is occupied (e.g., without necessarily providing a visual image of the occupying passenger). Based on the accumulated passenger data, for example, the IIS 100d (FIG. 3B) may determine to a sufficiently high degree of confidence that a given enhanced privacy compartment, remote area or compartment is occupied by a passenger who has fastened their seatbelt.

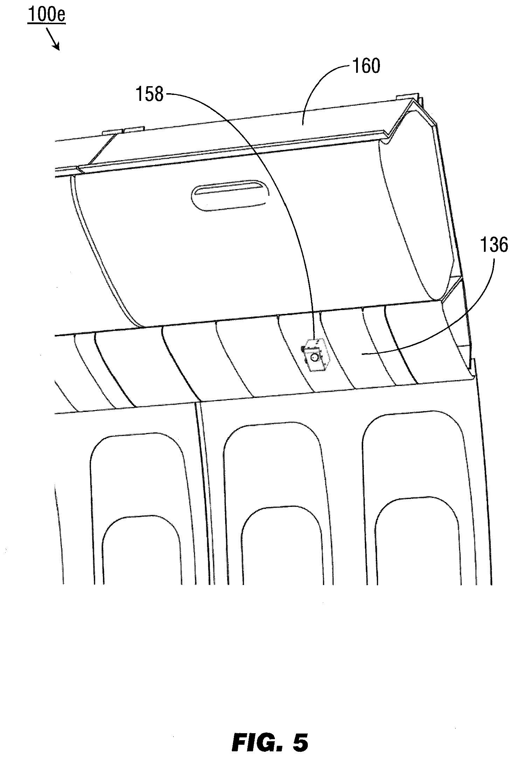

Referring to FIG. 5, the IIS 100e may be implemented and may function similarly to the IIS 100d of FIG. 3B, except that the IIS 100e may include one or more cameras (158) incorporated into a Passenger Service Unit 136 (PSU) or into its supporting structure or rails. For example, the IIS 100e may be integrated into, or communicative with, a "smart PSU" system whereby the camera 158 and other cameras of the IIS 100e are controllable to capture image streams (142, FIG. 3A) of overhead bins (160) aboard the aircraft 114 (FIG. 3B). For example, the camera 158 may capture raw image streams (142, FIG. 3A), and the IIS 100e may assemble composite or enhanced image streams (144, FIG. 3A) of overhead bins 160 opposite the camera 158 (including the contents of said overhead bins, depending upon whether the overhead bins are open or closed).

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the scope and coverage of the inventive concepts claimed herein.

## Claims

1. An aircraft (114), comprising an integrated imaging system (100, 100a-d) comprising:
a plurality of cameras (102, 104, 106, 134) mounted within an interior environment of the aircraft (114), the aircraft comprising at least one zone (108, 110, 112), each camera associated with at least one field of view (FOV) (102a, 104a, 106a) and configured to capture at least one image stream corresponding to the FOV, the image stream associated with the at least one zone (108, 110, 112) and a plurality of passengers (118) seated within the at least one zone;
at least one processor (140) coupled to the plurality of cameras (102, 104, 106, 134) and configured to:
receive the at least one image stream (142a-d) from the plurality of cameras; and
generate at least one enhanced image stream (144a-c) based on the at least one received image stream; and
at least one display unit (124) coupled to the at least one processor (140) and configured to display at least one of the image stream (142, 142a-d) and the enhanced image stream (144, 144a-c) to at least one user, wherein the at least one enhanced image stream (144, 144a-c) includes an augmented reality environment;
the at least one processor (140) includes at least one memory configured to store environmental data associated with at least one of the aircraft (114), the one or more zones (108, 110, 112), and the plurality of passengers;
the at least one processor configured to generate the augmented reality environment based on the environmental data and the at least one image stream,
wherein the system is configured to be activated by the at least one user via the at least one display unit (124),
wherein the plurality of cameras (102, 104, 106, 134) includes at least one second mobile camera associated with a default configuration including at least one of a default orientation and a default setting;
and
on activation of the system, the at least one second mobile camera is configured to revert to the default configuration,
wherein the at least one second mobile camera (134) is retractably disposed within a fixture of the interior environment and associated with one or more of a retracted position within the fixture and an active position extending from the fixture, the active position corresponding to the default configuration.

2. The aircraft (114) according to claim 1, wherein the at least one enhanced image stream (144, 144a-c) is based on one or more of a first image stream (142, 142a-d) associated with a first zone and:
a second image stream associated with the at least one zone;
and
a third image stream associated with at least one second zone.

3. The aircraft (114) according to claim 1 or 2, wherein the at least one display unit (124) includes at least one of:
a first display unit visible by the at least one user when occupying a cabin crew seat in a seated and belted position;
and
a second display unit mounted within a cockpit of the aircraft (114).

4. The aircraft (114) according to one or more of claims 1-3, wherein the at least one display unit (124) includes at least one mobile device (128) wirelessly coupled to the at least one processor (140).

5. The aircraft (114) according to one or more of claims 1-4, wherein the at least one display unit (124) is configured to receive control input from the at least one user (116), wherein
the plurality of cameras (102, 104, 106, 134) preferably includes at least one first mobile camera adjustably mounted to the interior environment;
and
the at least one first mobile camera is preferably configured to execute at least one of a rotation, a pan, and a zoom in response to the received control input.

6. The aircraft (114) according to claim 5, wherein the at least one display unit (124) is configured to manipulate the at least one displayed enhanced image stream (144, 144a-c) in response to the received control input, wherein the manipulation of the at least one displayed enhanced image stream preferably includes:
selecting a first enhanced image stream (144, 144a-c) based on one or more of the associated FOV, the associated zone, and the associated camera (102, 104, 106, 134).

7. The aircraft (114) according to one or more of claims 1-6, wherein the plurality of cameras (102, 104, 106, 134) includes at least one first camera associated with at least one of:
a transverse orientation substantially orthogonal to a longitudinal axis of the aircraft (114);
and
a downward orientation.

8. The aircraft (114) according to one or more of claims 1-7, wherein the one or more zones include at least one of:
a cargo compartment of the aircraft;
a galley area of the aircraft;
a crew rest area of the aircraft;
a remote area of the aircraft;
an engine of the aircraft; and
an exterior environment of the aircraft; and/or
wherein the plurality of cameras (102, 104, 106) includes at least one of:
an external camera mounted to an exterior surface of the aircraft;
a thermal imaging device; and
an infrared (IR) image sensor.

9. The aircraft (114) according to one or more of claims 1-8, further comprising:
at least one transceiver (148) coupled to the at least one processor (140) and configured to wirelessly transmit one or more of the at least one image stream (142) and the at least one enhanced image stream (144) to at least one third display unit proximate to a ground-based control facility.

10. The aircraft (114) according to one or more of claims 1-9, further comprising:
at least one non-visual sensor configured to capture the environmental data, the non-visual sensor coupled to one or more of a passenger seat (120), a passenger seatbelt, and a passenger compartment.

11. The aircraft (114) according to one or more of claims 1-10, wherein the plurality of cameras (102, 104, 106, 134) includes at least one second camera incorporated into a passenger service unit (PSU) (136) of the aircraft.

12. The aircraft (114) according to one or more of claims 1-11, wherein:
the system is electronically coupled to at least one lighting system associated with the interior environment, the lighting system comprising one or more lighting elements; and
on activation of the system, the lighting system is configured to adjust the one or more lighting elements to optimize the at least one image stream.

## Patentansprüche

1. Luftfahrzeug (114), das ein integriertes Bildgebungssystem (100, 100a-d) umfasst, das Folgendes umfasst:
mehrere Kameras (102, 104, 106, 134), die in einer inneren Umgebung des Luftfahrzeugs (114) angebracht sind, wobei das Luftfahrzeug mindestens einen Bereich (108, 110, 112) umfasst, jede Kamera mindestens einem Blickfeld (FOV) (102a, 104a, 106a) zugeordnet ist und konfiguriert ist, mindestens einen Bildstrom zu erfassen, der dem FOV entspricht, der Bildstrom dem mindestens einen Bereich (108, 110, 112) zugeordnet ist und mehrere Passagiere (118) in dem mindestens einen Bereich sitzen;
mindestens einen Prozessor (140), der mit den mehreren Kameras (102, 104, 106, 134) gekoppelt ist und konfiguriert ist zum:
Empfangen des mindestens einen Bildstroms (142a-d) von den mehreren Kameras; und
Erzeugen mindestens eines erweiterten Bildstroms (144a-c) auf der Grundlage mindestens eines empfangenen Bildstroms;
und
mindestens eine Anzeigeeinheit (124), die mit dem mindestens einen Prozessor (140) gekoppelt ist und konfiguriert ist, den Bildstrom (142, 142a-d) und/oder den erweiterten Bildstrom (144, 144a-c) für mindestens einen Anwender anzuzeigen,
wobei der mindestens eine erweiterte Bildstrom (144, 144a-c) eine Umgebung einer erweiterten Realität enthält;
der mindestens eine Prozessor (140) mindestens einen Speicher enthält, der konfiguriert ist, Umgebungsdaten zu speichern, die dem Luftfahrzeug (114) und/oder dem einen oder den mehreren Bereichen (108, 110, 112) und/oder den mehreren Passagieren zugeordnet sind;
der mindestens eine Prozessor konfiguriert ist, die Umgebung einer erweiterten Realität auf der Grundlage der Umgebungsdaten und des mindestens einen Bildstroms zu erzeugen,
wobei das System konfiguriert ist, durch den mindestens einen Anwender über die mindestens eine Anzeigeeinheit (124) aktiviert zu werden,
wobei die mehreren Kameras (102, 104, 106, 134) mindestens eine zweite mobile Kamera enthalten, die einer Standardkonfiguration zugeordnet ist, die eine Standardorientierung und/oder eine Standardeinstellung enthält; und
aufgrund der Aktivierung des Systems die mindestens eine zweite mobile Kamera konfiguriert ist, in die Standardkonfiguration zurückzukehren,
wobei die mindestens eine zweite mobile Kamera (134) in einer Ausstattungskomponente der inneren Umgebung einziehbar angeordnet ist und einer eingezogenen Position in der Ausstattungskomponente und/oder einer aktiven Position, die sich aus der Ausstattungskomponente erstreckt, zugeordnet ist, wobei die aktive Position der Standardkonfiguration entspricht.

2. Luftfahrzeug (114) nach Anspruch 1, wobei der mindestens eine erweiterte Bildstrom (144, 144a-c) beruht auf einem ersten Bildstrom (142, 142a-d), der einem ersten Bereich zugeordnet ist; und/oder:
einem zweiten Bildstrom, der dem mindestens einen Bereich zugeordnet ist; und/oder
einem dritten Bildstrom, der mindestens einem zweiten Bereich zugeordnet ist.

3. Luftfahrzeug (114) nach Anspruch 1 oder 2, wobei die mindestens eine Anzeigeeinheit (124) Folgendes enthält:
eine erste Anzeigeeinheit, die für den mindestens einen Anwender sichtbar ist, wenn ein Bordpersonalsitz in einer sitzenden und angeschnallten Position eingenommen wird; und/oder
eine zweite Anzeigeeinheit, die in einem Cockpit des Luftfahrzeugs (114) angebracht ist.

4. Luftfahrzeug (114) nach einem oder mehreren der Ansprüche 1-3, wobei die mindestens eine Anzeigeeinheit (124) mindestens eine mobile Vorrichtung (128) enthält, die mit dem mindestens einen Prozessor (140) drahtlos gekoppelt ist.

5. Luftfahrzeug (114) nach einem oder mehreren der Ansprüche 1-4, wobei die mindestens eine Anzeigeeinheit (124) konfiguriert ist, von dem mindestens einen Anwender (116) eine Steuerungseingabe zu empfangen, wobei
die mehreren Kameras (102, 104, 106, 134) vorzugsweise mindestens eine erste mobile Kamera enthalten, die an der inneren Umgebung einstellbar angebracht ist; und
die mindestens eine erste mobile Kamera vorzugsweise konfiguriert ist, als Antwort auf die empfangene Steuerungseingabe eine Drehung und/oder einen Schwenk und/oder einen Zoomvorgang auszuführen.

6. Luftfahrzeug (114) nach Anspruch 5, wobei die mindestens eine Anzeigeeinheit (124) konfiguriert ist, als Antwort auf die empfangene Steuerungseingabe den mindestens einen angezeigten erweiterten Bildstrom (144, 144a-c) zu manipulieren, wobei die Manipulation des mindestens einen angezeigten, erweiterten Bildstroms vorzugsweise Folgendes enthält:
Auswählen eines ersten erweiterten Bildstroms (144, 144a-c) auf der Grundlage des zugeordneten FOV und/oder des zugeordneten Bereichs und/oder der zugeordneten Kamera (102, 104, 106, 134).

7. Luftfahrzeug (114) nach einem oder mehreren der Ansprüche 1-6, wobei die mehreren Kameras (102, 104, 106, 134) mindestens eine erste Kamera enthalten, die Folgendem zugeordnet ist:
einer Querausrichtung, die im Wesentlichen zu einer Längsachse des Luftfahrzeugs (114) senkrecht ist; und/oder
einer Ausrichtung nach unten.

8. Luftfahrzeug (114) nach einem oder mehreren der Ansprüche 1-7, wobei der eine oder die mehreren Bereiche Folgendes enthalten:
einen Frachtraum des Luftfahrzeugs; und/oder
einen Bordküchenbereich des Luftfahrzeugs; und/oder
einen Besatzungsruhebereich des Luftfahrzeugs; und/oder
einen entfernten Bereich des Luftfahrzeugs; und/oder
eine Kraftmaschine des Luftfahrzeugs; und/oder
eine äußere Umgebung des Luftfahrzeugs;
und/oder wobei die mehreren Kameras (102, 104, 106) Folgendes enthalten:
eine äußere Kamera, die an einer Außenfläche des Luftfahrzeugs angebracht ist; und/oder
eine Wärmebildgebungsvorrichtung; und/oder
einen Infrarotbildsensor (IR-Bildsensor).

9. Luftfahrzeug (114) nach einem oder mehreren der Ansprüche 1-8, das ferner Folgendes umfasst:
mindestens eine Sende/Empfangs-Einheit (148), die mit dem mindestens einen Prozessor (140) gekoppelt ist und konfiguriert ist, den mindestens einen Bildstrom (142) und/oder den mindestens einen erweiterten Bildstrom (144) drahtlos an mindestens eine dritte Anzeigeeinheit in räumlicher Nähe zu einer auf dem Boden stationierten Steuerungseinrichtung zu übertragen.

10. Luftfahrzeug (114) nach einem oder mehreren der Ansprüche 1-9, das ferner Folgendes umfasst:
mindestens einen nicht visuellen Sensor, der konfiguriert ist, die Umgebungsdaten zu erfassen, wobei der nicht visuelle Sensor mit einem Passagiersitz (120) und/oder einem Passagiersicherheitsgurt und/oder einem Passagierraum gekoppelt ist.

11. Luftfahrzeug (114) nach einem oder mehreren der Ansprüche 1-10, wobei die mehreren Kameras (102, 104, 106, 134) mindestens eine zweite Kamera enthalten, die in eine Passagierserviceeinheit (PSU) (136) des Luftfahrzeugs eingebaut ist.

12. Luftfahrzeug (114) nach einem oder mehreren der Ansprüche 1-11, wobei:
das System mit mindestens einem Beleuchtungssystem elektronisch gekoppelt ist, das der inneren Umgebung zugeordnet ist, wobei das Beleuchtungssystem ein oder mehrere Beleuchtungselemente umfasst; und
aufgrund der Aktivierung des Systems das Beleuchtungssystem konfiguriert ist, das eine oder die mehreren Beleuchtungselemente einzustellen, derart, dass der mindestens eine Bildstrom optimiert wird.

## Revendications

1. Aéronef (114), comprenant un système d'imagerie intégré (100, 100a-d) comprenant :
une pluralité de caméras (102, 104, 106, 134) montées dans un environnement intérieur de l'aéronef (114), l'aéronef comprenant au moins une zone (108, 110, 112), chaque caméra étant associée à au moins un champ de vision (FOV) (102a, 104a, 106a) et configurée pour capturer au moins un flux d'images correspondant au FOV, le flux d'images étant associé à l'au moins une zone (108, 110, 112) et à une pluralité de passagers (118) assis dans l'au moins une zone ;
au moins un processeur (140) couplé à la pluralité de caméras (102, 104, 106, 134) et configuré pour :
recevoir l'au moins un flux d'images (142a-d) de la pluralité de caméras ; et
générer au moins un flux d'images amélioré (144a-c) sur la base de l'au moins un flux d'images reçu ;
et
au moins une unité d'affichage (124) couplée à l'au moins un processeur (140) et configurée pour afficher au moins l'un parmi le flux d'images (142, 142a-d) et le flux d'images amélioré (144, 144a-c) à au moins un utilisateur,
dans lequel l'au moins un flux d'images amélioré (144, 144a-c) comprend un environnement de réalité augmentée ;
l'au moins un processeur (140) comprend au moins une mémoire configurée pour stocker des données environnementales associées à au moins l'un parmi l'aéronef (114), la ou les plusieurs zone(s) (108, 110, 112) et la pluralité de passagers ;
l'au moins un processeur étant configuré pour générer l'environnement de réalité augmentée sur la base des données environnementales et de l'au moins un flux d'images,
dans lequel le système est configuré pour être activé par l'au moins un utilisateur via l'au moins une unité d'affichage (124),
dans lequel la pluralité de caméras (102, 104, 106, 134) comprend au moins une deuxième caméra mobile associée à une configuration par défaut comprenant au moins l'un parmi une orientation par défaut et un réglage par défaut ;
et
lors de l'activation du système, l'au moins une deuxième caméra mobile est configurée pour revenir à la configuration par défaut,
dans lequel l'au moins une deuxième caméra mobile (134) est disposée de manière rétractable dans une installation de l'environnement intérieur et associée à une ou plusieurs parmi une position rétractée dans l'installation et une position active s'étendant depuis l'installation, la position active correspondant à la configuration par défaut.

2. Aéronef (114) selon la revendication 1, dans lequel l'au moins un flux d'images amélioré (144, 144a-c) est basé sur un ou plusieurs parmi un premier flux d'images (142, 142a-d) associé à une première zone et :
un deuxième flux d'images associé à l'au moins une zone ;
et
un troisième flux d'images associé à au moins une deuxième zone.

3. Aéronef (114) selon la revendication 1 ou 2, dans lequel l'au moins une unité d'affichage (124) comprend au moins l'une parmi :
une première unité d'affichage visible par l'au moins un utilisateur lorsqu'il occupe un siège de personnel de cabine dans une position assise et de port de ceinture ;
et
une deuxième unité d'affichage montée dans un poste de pilotage de l'aéronef (114).

4. Aéronef (114) selon une ou plusieurs des revendications 1 à 3, dans lequel l'au moins une unité d'affichage (124) comprend au moins un dispositif mobile (128) couplé sans fil à l'au moins un processeur (140).

5. Aéronef (114) selon une ou plusieurs des revendications 1 à 4, dans lequel l'au moins une unité d'affichage (124) est configurée pour recevoir une entrée de commande de l'au moins un utilisateur (116), dans lequel
la pluralité de caméras (102, 104, 106, 134) comprend de préférence au moins une première caméra mobile montée de manière réglable sur l'environnement intérieur ;
et
l'au moins une première caméra mobile est de préférence configurée pour exécuter au moins l'un parmi une rotation, un panoramique et un zoom en réponse à l'entrée de commande reçue.

6. Aéronef (114) selon la revendication 5, dans lequel l'au moins une unité d'affichage (124) est configurée pour manipuler l'au moins un flux d'images amélioré affiché (144, 144a-c) en réponse à l'entrée de commande reçue, dans lequel la manipulation de l'au moins un flux d'images amélioré affiché comprend de préférence :
la sélection d'un premier flux d'images amélioré (144, 144a-c) sur la base d'un ou de plusieurs parmi le FOV associé, la zone associée et la caméra associée (102, 104, 106, 134).

7. Aéronef (114) selon une ou plusieurs des revendications 1 à 6, dans lequel la pluralité de caméras (102, 104, 106, 134) comprend au moins une première caméra associée à au moins l'une parmi :
une orientation transversale sensiblement orthogonale à un axe longitudinal de l'aéronef (114) ;
et
une orientation vers le bas.

8. Aéronef (114) selon une ou plusieurs des revendications 1 à 7, dans lequel la ou les plusieurs zone(s) comprend/comprennent au moins l'un parmi :
une soute de l'aéronef ;
une zone d'office de l'aéronef ;
une zone de repos d'équipage de l'aéronef ;
une zone éloignée de l'aéronef ;
un moteur de l'aéronef ; et
un environnement extérieur de l'aéronef ; et/ou
dans lequel la pluralité de caméras (102, 104, 106) comprend au moins l'un parmi :
une caméra externe montée sur une surface extérieure de l'aéronef ;
un dispositif d'imagerie thermique ; et
un capteur d'image infrarouge (IR).

9. Aéronef (114) selon une ou plusieurs des revendications 1 à 8, comprenant en outre :
au moins un émetteur-récepteur (148) couplé à l'au moins un processeur (140) et configuré pour transmettre sans fil un ou plusieurs parmi l'au moins un flux d'images (142) et l'au moins un flux d'images amélioré (144) à au moins une troisième unité d'affichage à proximité d'une installation de contrôle au sol.

10. Aéronef (114) selon une ou plusieurs des revendications 1 à 9, comprenant en outre :
au moins un capteur non visuel configuré pour capturer les données environnementales, le capteur non visuel étant couplé à un ou plusieurs parmi un siège passager (120), une ceinture de sécurité de passager, et une cabine passagers.

11. Aéronef (114) selon une ou plusieurs des revendications 1 à 10, dans lequel la pluralité de caméras (102, 104, 106, 134) comprend au moins une deuxième caméra incorporée dans un bloc service passagers (PSU) (136) de l'aéronef.

12. Aéronef (114) selon une ou plusieurs des revendications 1 à 11,
dans lequel :
le système est couplé électroniquement à au moins un système d'éclairage associé à l'environnement intérieur, le système d'éclairage comprenant un ou plusieurs élément(s) d'éclairage ; et
lors de l'activation du système, le système d'éclairage est configuré pour régler le ou les plusieurs élément(s) d'éclairage pour optimiser l'au moins un flux d'images.
